# DEMANDE DE BREVET EUROPEEN

(11) **EP 3 666 456 A1**
(43) Date de publication de la demande: **17.06.2020**
(21) Numéro de dépôt: 19215050.6
(22) Date de dépôt: 10.12.2019
(51) Int. Cl.: B23Q 11/00, B23B 51/00

(54) **OUTIL DE TRAVAIL ET SON DISPOSITIF D'ASPIRATION DE POUSSIERE**

(30) Priorité: 14.12.2018 FR 1872961
(71) Demandeur: DIAGER, 39800 Poligny (FR)
(72) Inventeur: DEFOUGERES, François, 39800 POLIGNY (FR)
(74) Mandataire: Novagraaf Technologies

(57) **Abrégé**

L'invention concerne un outil de travail équipé d'un dispositif d'aspiration de poussière, l'outil de perçage comprend une tête de travail (10) solidaire d'une tige d'entrainement (1), le dispositif d'aspiration comprend un tube d'aspiration (2) monté autour de la tige d'entrainement (1) et dont une première extrémité (21) est montée sur un manchon (3), le manchon (3) étant monté libre en rotation sur la tige d'entrainement (1) de l'outil de perçage et étant relié à un dispositif générant une dépression dans le tube d'aspiration (2) caractérisé en ce qu'au moins une portion de la circonférence de la deuxième extrémité (22) du tube (2) est en contact avec la tête de forage (10), le dispositif d'aspiration comprend un évent (4) formé entre la deuxième extrémité du tube (22) et la tête de travail (10)..

## Description

L'invention concerne le domaine des outils de travail et plus particulièrement des outils de perçage de type foret, des outils de frappe ou des outils de percussion et comprenant un dispositif permettant d'aspirer la poussière générée pendant l'opération de forage d'un trou.

Le document DE3340090 divulgue un outil de perçage comprenant un dispositif d'aspiration de poussière. Ce dispositif d'aspiration comprend un tube, dans lequel est monté un foret de perçage dont le diamètre de la tige d'entrainement est légèrement inférieur au diamètre du tube. Le tube est relié par une extrémité à un dispositif d'aspiration. L'autre extrémité du tube est distante du foret pour ménager un orifice d'aspiration des poussières entre le foret et la paroi intérieur du tube. Les dimensions du tube doivent être ajustées à la dimension du foret. Il est donc nécessaire de disposer d'un tube d'aspiration pour chaque diamètre de foret.

Un but de la présente invention est de répondre aux inconvénients du document de l'art antérieur mentionné ci-dessus et en particulier, d'assurer une efficacité d'aspiration optimale pour différents diamètres de foret.

Pour cela, un premier aspect de l'invention concerne un outil de travail équipé d'un dispositif d'aspiration de poussière, l'outil de travail comprend une tête de travail solidaire d'une tige d'entrainement, le dispositif d'aspiration comprend un tube d'aspiration monté autour de la tige d'entrainement et dont une première extrémité est montée sur un manchon, le manchon étant monté libre en rotation sur la tige d'entrainement de l'outil de travail et étant relié à un dispositif générant une dépression dans le tube d'aspiration caractérisé en ce qu'au moins une portion de la circonférence de la deuxième extrémité du tube est en contact avec la tête de travail, le dispositif d'aspiration comprend un évent formé entre la deuxième extrémité du tube et la tête de travail.

On comprend que les dimensions du tube d'aspiration sont indépendantes des dimensions de la tige et que les dimensions de la deuxième extrémité du tube peuvent permettre une utilisation avec plusieurs tiges de forage. Par ailleurs, l'aspiration des poussières est concentré au niveau des évents situés au plus près de la zone de forage de l'outil ce qui augmente l'efficacité d'aspiration.

Selon une autre variante de réalisation, l'évent est formé par une rainure sur la surface extérieure de la tête de travail.

Selon une autre variante de réalisation, l'évent est formé par bossage sur la périphérie de la deuxième extrémité du tube d'aspiration.

Selon une autre variante de réalisation, la tête de forage comprend un épaulement formant une surface de réception de la deuxième extrémité du tube d'aspiration.

Selon une autre variante de réalisation, l'évent débouche dans un canal traversant la tête de travail

Selon une autre variante de réalisation, un moyen de couplage entre le manchon et le tube d'aspiration est agencé pour assurer le centrage du tube sur la tige d'entrainement.

Selon une autre variante de réalisation, le moyen de couplage comprend une bague solidaire du manchon, la bague comprenant un ergot coopérant avec une encoche pratiquée sur la première extrémité du tube d'aspiration pour bloquer la rotation du tube d'aspiration par rapport au manchon.

Selon une autre variante de réalisation, la bague est en 2 parties.

Selon une autre variante de réalisation, la bague comprend une rainure interne agencée pour assurer une communication entre le volume intérieur du tube d'aspiration et le dispositif générant la dépression.

Selon une autre variante de réalisation, le manchon comprend une surface annulaire interne de contact avec une surface annulaire correspondante de la tige de l'outil.

Selon une autre variante de réalisation, la tige de l'outil de travail comprend une première portion comprenant la tête de travail et une deuxième portion d'entrainement distinct, l'assemblage des deux portions étant réalisé au niveau ou en amont du manchon.

Selon une autre variante de réalisation, l'outil de travail comprend un insert disposé entre le tube d'aspiration et la tête de travail, l'évent étant agencé au moins en partie dans l'insert.

Selon une autre variante de réalisation l'outil de travail est un outil de perçage et la tête de travail est la tête de perçage de l'outil.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[Fig. 1] représente une vue de côté de l'outil de perçage et son dispositif d'aspiration de poussière selon l'invention;
[Fig. 2] représente une vue de détails de la tête de forage de l'outil de perçage et son dispositif d'aspiration de poussière ;
[Fig. 3] représente une vue de détails de la tête de forage de l'outil de perçage;
[Fig. 4] représente une vue en perspective éclatée de l'outil de perçage et son dispositif d'aspiration de poussière ;
[Fig. 5] représente une vue de détails du manchon du dispositif d'aspiration;
[Fig. 6] représente une vue de détails d'une deuxième variante de réalisation de la tête de forage de l'outil de perçage et son dispositif d'aspiration de poussière ;

La description qui va suivre est réalisée en référence à un outil de perçage comprenant une tête de forage. Toutefois sans sortir du cadre de l'invention, celle-ci s'applique également à d'autres outils de travail comprenant une tête de travail tels qu'un outil de frappe ou un outil de percussion. On entend également par poussière, des débris ou des copeaux.

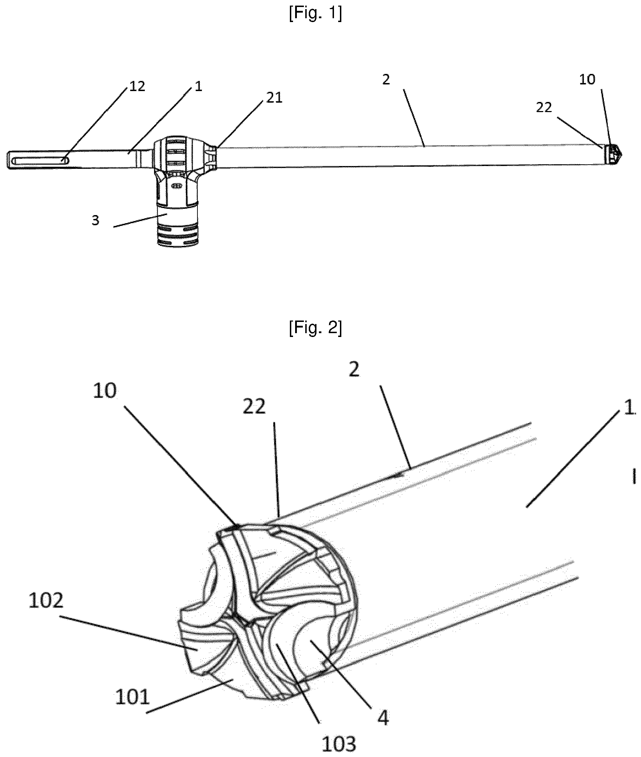

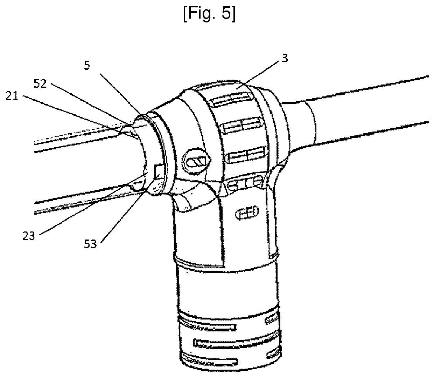

L'outil de perçage et son dispositif d'aspiration de poussière selon l'invention va à présent être décrit en référence aux figures 1 à 5.

L'outil de perçage comprend de façon connue en soi, une tige 1 d'entrainement comprend une tête de travail, ici une tête de forage 10 à l'une de ses extrémités 11, l'autre extrémité 12 est conformée pour venir s'insérer dans un mandrin d'appareil de perçage (non représenté). Le dispositif d'aspiration proprement dit comprend un tube d'aspiration 2 dans lequel est insérée la tige 1 d'entrainement. Les dimensions du tube d'aspiration sont choisies pour que la tige 1 d'entrainement puisse tourner librement dans le tube 2 d'aspiration. Le dispositif d'aspiration comprend également un manchon 3 monté libre en rotation sur la tige 1 d'entrainement. Ainsi, le manchon 3 comprend un orifice 30 dans lequel passe la tige 1 d'entrainement. Au niveau de l'interface entre la tige 1 d'entrainement et de l'orifice 30 du manchon 3, la tige comprend un renflement 13 dont le diamètre correspond sensiblement au diamètre intérieur de l'orifice 30 du manchon 3. Cette interface entre le manchon 3 et le renflement de la tige 1 crée une étanchéité suffisante dans le manchon 3 pour maintenir une dépression dans le tube 2 d'aspiration.

La première extrémité 21 du tube d'aspiration 2 est montée sur le manchon 3 d'aspiration. Le tube d'aspiration 2 est en liaison aéraulique avec le manchon 3. Le manchon 3 est relié à un moyen pour générer une dépression dans le tube d'aspiration 2. Compte tenu des dimensions du tube 2 d'aspiration et de la tige 1 d'entrainement, l'espace délimité par, d'une part la surface intérieure du tube d'aspiration 2 et d'autre part la surface extérieure de la tige 1 d'entrainement défini une chambre d'aspiration sensiblement annulaire. Le flux d'aspiration est alors créé dans cette chambre d'aspiration. La forme de la chambre facilite l'aspiration et réduit les risques de colmatage entre la surface extérieure de la tige 1 d'entrainement et la surface interne du tube 2 d'aspiration.

Selon une variante de réalisation, au moins une portion de la circonférence de la deuxième extrémité 22 du tube 2 d'aspiration est en contact avec la tête 10 de forage de l'outil de perçage. Par ailleurs, le dispositif d'aspiration comprend au moins un évent 4 formé entre la tête de forage 10 et la deuxième extrémité 22 du tube d'aspiration. On comprend que le contact partiel entre la circonférence de la deuxième extrémité 22 du tube 2 d'aspiration et la tête de forage permet de concentrer la dépression créée dans le tube 2 d'aspiration au niveau du (des) évent(s) 4 ce qui augmente l'efficacité d'aspiration. La tête de forage 10 peut comprendre un épaulement 14 sur lequel vient en appui la portion de la circonférence de la deuxième extrémité du tube d'aspiration.

Selon la variante de réalisation représentée, chaque évent 4 est formé par une rainure de la tête de forage réalisée en vis-à-vis de la deuxième extrémité 22 du tube 2 d'aspiration. Selon une autre variante, chaque évent 4 est formé par un bossage réalisé sur la périphérie de la deuxième extrémité 22 du tube 2 d'aspiration en vis-à-vis de la surface extérieur de la tête 10 de forage. Chaque évent peut déboucher sur le sommet de la tête de forage 10 pour être au plus près des poussières à aspirer. On peut également prévoir un insert (non représenté) dans la zone d'interface entre le tube 2 d'aspiration et la surface extérieur de la tête 10 de forage. Cet insert comprend au moins en partie le ou les évents 4 et assure le glissement du tube 2 d'aspiration sur la tête de forage 10. L'insert est soit solidaire de l'extrémité du tube 2 d'aspiration soit solidaire de la tête de forage 10.

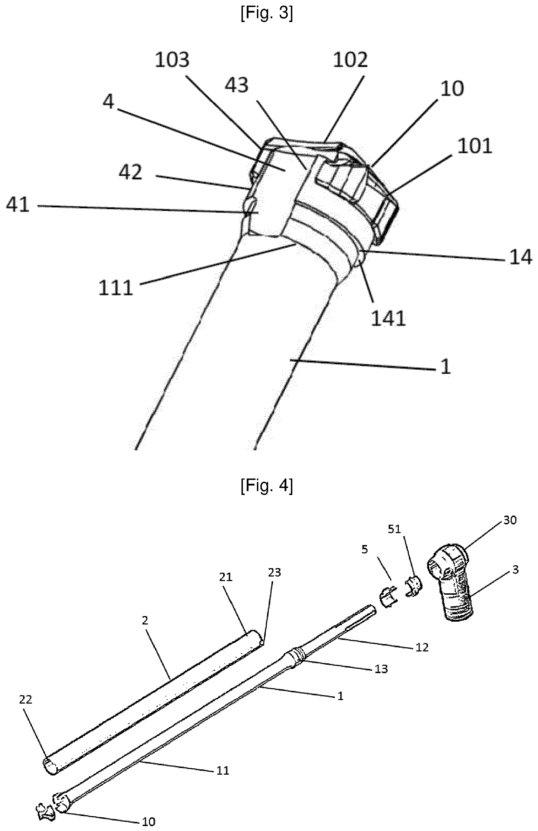

Comme représenté sur le mode de réalisation des figures 1 à 4, en particulier illustré par la figure 3, chaque évent 4 est constitué par une rainure axiale, ou évidement, formant une paroi cylindrique concave 41 dans la surface axiale extérieure de la tête de forage 10. La paroi cylindrique concave 41 a une section transversale en arc de cercle. L'évent 4 s'étend axialement depuis l'extrémité de la tige d'entraînement 1, à la jonction 111 avec la tête de forage 10, jusqu'à la surface 101 de la tête de forage 10. L'évent 4 comprend ainsi deux arêtes 42, 43 s'étendant globalement chacune dans une direction axiale pour définir les bords latéraux de l'évent 4. De préférence la tête de forage 10 comporte deux évents 4 diamétralement opposés. La zone de travail 102 de la tête de forage 10 est agencée sur la surface 101 de la tête de forage 10. La zone de travail 102 de la tête de forage 10 comporte ici deux encoches 103 diamétralement opposées qui permettent respectivement à chaque évent 4 de déboucher dans la surface 101 de la tête de forage 10. A partir de la jonction 111, la tête de forage 10 augmente progressivement en diamètre jusqu'à former l'épaulement 14 qui définit une surface radiale annulaire 141 orientée vers le tube 2 d'aspiration.

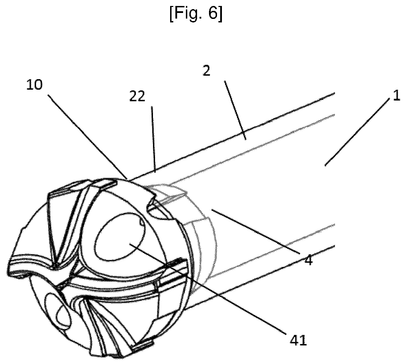

Selon la variante de réalisation de la figure 6, l'évent 4 peut se prolonger dans la tête de forage 10 par un canal 41 qui débouche sur la surface de la tête de forage 10. Ce canal 41 permet notamment d'aspirer la poussière au plus près de la zone de travail de l'outil de perçage. De même, la présence du canal 41 permet d'aspirer plus de poussière au tout début de l'opération de perçage.

L'assemblage du tube 2 d'aspiration sur le manchon 3 peut être assuré par un moyen de couplage 5. Ce moyen de couplage permet notamment le centrage du tube 2 d'aspiration sur la tige 1 d'entrainement. Plus précisément, le moyen de couplage 5 assure le centrage du tube 2 d'aspiration sur la première extrémité 11 de la tige 1 d'entrainement. Ce moyen de couplage 5 permet également le démontage du tube 2 d'aspiration, du manchon 3.

Le moyen de couplage comprend par exemple une bague 5 assurant l'interface mécanique entre le manchon 3 et le tube 2 d'aspiration. La bague 5 est montée d'une part dans le manchon 3, de façon sensiblement coaxiale avec l'axe longitudinal de la tige 1 d'entrainement. La bague 5 comprend par exemple une première collerette 51 venant s'engager dans le manchon 3.

La bague 5 comprend également une deuxième collerette 52 sur laquelle vient s'engager la première extrémité du tube 2 d'aspiration. La valeur du diamètre extérieur de la deuxième collerette 52 correspond sensiblement à la valeur du diamètre intérieur de la première extrémité 21 du tube d'aspiration. Ceci permet d'une part de centrer le tube par rapport à la tige 1 d'entrainement et d'autre part de créer un jeu entre la tige 1 d'entrainement et le tube 2 d'aspiration. Le diamètre intérieur de la bague 5 est suffisamment grand pour permettre la rotation de la tige 1 d'entrainement.

La bague 5 comprend également un ergot 53 dans lequel vient s'engager une encoche 23 de la deuxième extrémité 22 du tube 2 d'aspiration. Le tube 2 d'aspiration est alors bloqué en rotation par rapport au manchon 3. De même, le tube 2 est également bloqué en rotation par rapport à la tige 1 d'entrainement. Dans cette configuration, l'utilisateur peut saisir le tube 2 d'aspiration lors de l'opération de perçage sans risque de blessure.

Lorsque le tube 2 d'aspiration n'est pas bloqué en rotation, il peut être entrainé en rotation notamment par le frottement de la première extrémité 21 du tube 2 d'aspiration sur la tête de forage 10. Toutefois, un utilisateur peut saisir le tube 2 d'aspiration malgré tout puisque le couple d'entrainement du tube 2 d'aspiration est très faible.

Le diamètre intérieur de la bague 5 peut comprendre également des nervures pour assurer une communication aéraulique entre le tube 2 d'aspiration et le manchon 3. Ces nervures peuvent être réalisées alternativement ou cumulativement sur le corps du manchon 3. Selon la variante de réalisation représentée, la bague 5 est en 2 parties. De même, il est possible de prévoir plusieurs types de bague 5 s'adaptant aux différentes diamètres de tube 2 d'aspiration.

Selon une autre variante de réalisation non représentée, la tige 1 de l'outil de perçage est en deux partie correspondant respectivement à la première et la deuxième extrémité 11, 12 de la tige 1. L'assemblage est réalisée de façon connue en soit par exemple au niveau du renflement 13.On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. Ainsi, à titre d'exemple non limitatif, le tube 2 d'aspiration peut être entrainé en rotation avec la tige 1 d'entrainement. Pour ce faire, des moyens de couplage sont prévus pour ne pas bloquer en rotation le tube d'aspiration par rapport à la tige d'entrainement. Le contact entre la tête de forage et le tube d'aspiration permet par exemple d'entrainer le tube d'aspiration en rotation.

Selon une variante de réalisation non représenté, l'espace entre le tube d'aspiration et la tige d'entrainement peut comprendre une languette dont l'orientation générale est sensiblement parallèle à l'axe du tube d'aspiration et agencée pour former un racloir limitant le risque de colmatage de l'espace entre tube d'aspiration et la tige d'entrainement. Cette languette peut également prévenir l'écrasement du tube d'aspiration contre la tige d'entrainement en cas de choc.

## Revendications

1. Outil de travail équipé d'un dispositif d'aspiration de poussière, l'outil de travail comprenant une tête de travail (10) solidaire d'une tige d'entrainement (1), le dispositif d'aspiration comprenant un tube d'aspiration (2) monté autour de la tige d'entrainement (1) dont une première extrémité (21) est montée sur un manchon (3), le manchon (3) étant monté libre en rotation sur la tige d'entrainement (1) de l'outil de travail et étant relié à un dispositif générant une dépression dans le tube d'aspiration (2), l'espace délimité par, d'une part la surface intérieure du tube d'aspiration (2) et d'autre part la surface extérieure de la tige d'entraînement (1) définissant une chambre d'aspiration sensiblement annulaire, au moins une portion de la circonférence de la deuxième extrémité (22) du tube (2) étant en contact avec la tête de travail (10), **caractérisé en ce que** le dispositif d'aspiration comprend un évent (4) formé entre la deuxième extrémité du tube (22) et la tête de travail (10) et formé par une rainure sur la surface extérieure de la tête de travail (10).

2. Outil de travail équipé d'un dispositif d'aspiration de poussière selon la revendication 1 **caractérisé en ce que** la rainure formant l'évent (4) est constituée par une paroi cylindrique concave (41) formée dans la surface axiale extérieure de la tête de forage (10).

3. Outil de travail équipé d'un dispositif d'aspiration de poussière selon la revendication 2 **caractérisé en ce que** la paroi cylindrique concave (41) a une section transversale en arc de cercle.

4. Outil de travail équipé d'un dispositif d'aspiration de poussière selon l'une des revendications 1 à 3 **caractérisé en ce que** l'évent (4) s'étend axialement depuis l'extrémité de la tige d'entraînement (1), à la jonction (111) avec la tête de forage (10), jusqu'à la surface (101) de la tête de forage (10).

5. Outil de travail équipé d'un dispositif d'aspiration de poussière selon la revendication 4 **caractérisé en ce que** la tête de forage (10) augmente progressivement en diamètre à partir de la jonction (111) jusqu'à former un épaulement (14) qui définit une surface radiale annulaire (141) orientée vers le tube d'aspiration (2).

6. Outil de travail équipé d'un dispositif d'aspiration de poussière selon la revendication 1 **caractérisé en ce que** l'évent (4) est formé par bossage sur la périphérie de la deuxième extrémité (22) du tube d'aspiration (2).

7. Outil de travail équipé d'un dispositif d'aspiration de poussière selon l'une des revendications précédentes **caractérisé en ce que** la tête de travail (10) comprend un épaulement (14) formant une surface de réception de la deuxième extrémité (22) du tube (2) d'aspiration.

8. Outil de travail équipé d'un dispositif d'aspiration de poussière selon l'une des revendications précédentes caractérisé ce qu'il comprend un moyen de couplage (5) entre le manchon (3) et le tube d'aspiration (2) agencé pour assurer le centrage du tube (2) sur la tige (1) d'entrainement.

9. Outil de travail équipé d'un dispositif d'aspiration de poussière selon la revendication précédente **caractérisé en ce que** le moyen de couplage comprend une bague (5) monté sur le manchon (3), la bague (5) comprenant un ergot (53) coopérant avec une encoche (23) pratiquée sur la première extrémité (21) du tube (2) d'aspiration pour bloquer la rotation du tube d'aspiration par rapport au manchon.

10. Outil de travail équipé d'un dispositif d'aspiration de poussière selon la revendication précédente **caractérisé en ce que** la bague (5) est en 2 parties.

11. Outil de travail équipé d'un dispositif d'aspiration de poussière selon l'une des revendications 9 ou 10 **caractérisé en ce que** la bague (5) comprend une rainure interne agencée pour assurer une communication entre le volume intérieur du tube d'aspiration et le dispositif générant la dépression.

12. Outil de travail équipé d'un dispositif d'aspiration de poussière selon l'une des revendications précédentes **caractérisé en ce que** le manchon (3) comprend une surface annulaire interne de contact avec une surface annulaire correspondante de la tige de l'outil.

13. Outil de travail équipé d'un dispositif d'aspiration de poussière selon l'une des revendications précédentes **caractérisé en ce que** la tige (1) de l'outil de travail comprend une première portion (11) comprenant la tête de travail et une deuxième portion d'entrainement (12) distincte, l'assemblage des deux portions étant réalisé au niveau ou en amont du manchon (3).

14. Outil de travail équipé d'un dispositif d'aspiration de poussière selon l'une des revendications précédentes **caractérisé en ce qu'**il comprend un insert disposé entre le tube d'aspiration et la tête de travail (10), l'évent (4) étant agencé au moins en partie dans l'insert.

15. Outil de travail équipé d'un dispositif d'aspiration de poussière selon l'une des revendications précédentes **caractérisé en ce que** l'outil de travail est un outil de perçage et la tête de travail (10) est la tête de perçage de l'outil.
